# EUROPEAN PATENT APPLICATION

(11) **EP 2 053 554 A1**
(43) Date de publication de la demande: **29.04.2009**
(21) Numéro de dépôt: 08290979.7
(22) Date de dépôt: 17.10.2008
(51) Int. Cl.: G06Q 20/00

(54) **Dispositif electronique portable pour l'echange de valeurs et procédé de mise en oeuvre d'un tel dispositif**

(30) Priorité: 22.10.2007 FR 0758476
(71) Demandeur: OBERTHUR TECHNOLOGIES, 75017 Paris (FR)
(72) Inventeur: Delolme Pierrick, 75013 Paris (FR); Bertin Marc, 78720 la Celle Les Bordes (FR)
(74) Mandataire: Imbert de Tremiolles, Ghislain

(57) **Abrégé**

L'invention a pour objet un dispositif électronique portable (100) permettant de procéder à un transfert en utilisant, notamment, un module de communication sans fil à faible portée (160), ainsi qu'un procédé pour le mettre en oeuvre. Le dispositif comprend des moyens (170) pour saisir un montant et une commande d'acceptation de telle sorte qu'un débiteur puisse entrer son code confidentiel sur son dispositif portable et non sur celui d'un tiers. Si la commande d'acceptation est authentifiée, un message sécurisé comprenant le montant est transmis, via le module de communication sans fil à faible portée (160), à un créditeur. Le créditeur peut alors ajouter ses références au message et le transmettre pour effectuer la transaction. Alternativement, le créditeur transmet ses références au débiteur, via le module de communication sans fil à faible portée, qui peut former une requête de transaction comprenant le montant et les références du créditeur.

## Description

La présente invention concerne l'échange de montants en valeurs, par exemple de valeurs monétaires, de points de fidélité, de bons d'achat ou d'abonnements, et plus particulièrement un dispositif électronique portable, par exemple un téléphone mobile, pour l'échange de valeurs ainsi qu'un procédé de mise en oeuvre d'un tel dispositif.

L'évolution des réseaux de communication, notamment Internet, a contribué au développement de nouveaux modes de distribution de biens et de services qui ont eux-mêmes entraîné la mise en oeuvre de nouveaux moyens de paiement. Par exemple, le paiement à travers un réseau de communication, aussi appelé paiement en ligne, permet à un utilisateur, après avoir commandé un article ou un service, de fournir des informations bancaires, un montant et une autorisation à un tiers de confiance afin que celui-ci transmette une requête de transaction auprès du système informatique de l'établissement bancaire concerné.

Cependant, si les moyens de paiement entre plusieurs sociétés ou entre des individus et des sociétés ont été à l'origine de nombreux développements, peu de systèmes permettent un échange de montants en valeurs, simple et sécurisé, entre plusieurs individus.

Il existe d'une part des porte-monnaie électroniques permettant à un débiteur de verser une somme monétaire à un créditeur, le débiteur et le créditeur étant physiquement proches l'un de l'autre au moment de la transaction. Selon ces systèmes, une carte de paiement est capable de mémoriser un nombre représentant un montant monétaire. Cette carte peut être créditée, ou rechargée, à l'aide d'un dispositif adapté. Elle est débitée lors de chaque paiement. Ce mode de paiement ne met généralement pas en oeuvre de mécanisme de vérification du consentement du titulaire de la carte par son authentification, il s'agit souvent d'un mode de paiement anonyme, comme un paiement en espèce. Cependant, un tel moyen de paiement ne peut être utilisé que pour de petites transactions. Par ailleurs, le créditeur doit disposer d'un dispositif adapté à la lecture de la carte, par contact ou sans contact, pour recevoir l'argent.

Il existe d'autre part des systèmes, tels que le système présenté dans la demande de brevet WO 03/023574, permettant à un débiteur de verser une somme monétaire à un créditeur, le débiteur et le créditeur n'étant pas nécessairement à proximité l'un de l'autre au moment de la transaction. Selon ces systèmes, un transfert monétaire peut être effectué entre deux individus pourvus d'entités électroniques telles que des téléphones mobiles. Les transactions sont ici réalisées par l'intermédiaire d'un système central dans lequel sont mémorisés les profils des utilisateurs. De tels profils permettent de mémoriser les informations bancaires des utilisateurs et d'effectuer les contrôles nécessaires. Cependant, une telle solution impose la saisie de l'identité du créditeur, ce qui peut s'avérer fastidieux.

L'invention permet de résoudre au moins un des problèmes exposés précédemment.

L'invention a ainsi pour objet un dispositif électronique portable personnel pour permettre à un utilisateur d'initier un transfert d'un montant en valeurs, ledit dispositif comprenant des moyens de communication sans fil à faible portée, ce dispositif comprenant les moyens suivants,
- moyens pour saisir au moins une donnée liée audit montant en valeurs ;
- moyens pour saisir une commande d'acceptation dudit transfert ;
- moyens pour authentifier ladite commande d'acceptation ; et,
- moyens pour transmettre un message sécurisé comprenant ladite au moins une donnée, ledit message sécurisé étant transmis via lesdits moyens de communication sans fil à faible portée.

Le dispositif selon l'invention permet à un débiteur, lors d'une transaction, d'entrer le montant de la transaction ainsi que son code confidentiel sur son dispositif et non sur celui d'un tiers, limitant ainsi les risques de vol du code confidentiel.

Avantageusement, le dispositif comprend en outre des moyens cryptographique pour chiffrer au moins une partie dudit message sécurisé permettant ainsi de sécuriser la transaction. En particulier, le montant de la transaction ne peut être modifié indépendamment de la volonté du débiteur.

Selon un mode de réalisation particulier, le dispositif comprend des moyens de mémorisation, de préférence sécurisé, dans lesquels est stockée au moins une référence d'un compte à débiter ou au moins une référence dudit utilisateur, ladite au moins une référence étant transmise dans ledit message sécurisé, afin de permettre à un débiteur d'éviter la saisie de ces informations à chaque transaction.

Le dispositif comprend de préférence des moyens pour ajouter au moins une information d'authentification audit message sécurisé, ladite au moins une information d'authentification permettant à un destinataire dudit message sécurisé, par exemple le créditeur et/ou un tiers devant effectuer la transaction, d'authentifier ledit message sécurisé. Les informations d'authentification peuvent être différentes pour le créditeur et pour le tiers devant effectuer la transaction. Le débiteur et/ou ladite au moins une donnée peuvent ainsi être authentifiés. Les informations d'authentification sont, par exemple, une signature obtenue à l'aide de moyens cryptographiques.

Toujours selon un mode de réalisation particulier, lesdits moyens pour authentifier ladite commande d'acceptation comprennent des moyens pour saisir un code confidentiel et des moyens pour comparer ledit code confidentiel à un code préalablement enregistré. Le dispositif comprend de préférence des moyens de mémorisation interne sécurisés adaptés à stocker ledit code préalablement enregistré.

Lesdits moyens pour saisir au moins une donnée liée audit montant en valeurs comprennent, par exemple, un clavier mécanique ou tactile.

L'invention a également pour objet un dispositif électronique portable personnel pour permettre à un utilisateur d'initier un transfert d'un montant en valeurs, ledit dispositif comprenant des moyens de communication sans fil à faible portée, ce dispositif comprenant les moyens suivants,
- moyens pour recevoir, via lesdits moyens de communication sans fil à faible portée, au moins une référence d'un compte à créditer ou d'un créditeur;
- moyens pour saisir au moins une donnée liée audit montant en valeurs ;
- moyens pour saisir une commande d'acceptation dudit transfert ;
- moyens pour authentifier ladite commande d'acceptation ; et,
- moyens pour créer et transmettre un message de transaction comprenant ladite au moins une donnée et ladite au moins une référence reçue.

Le dispositif selon l'invention permet à un débiteur, lors d'une transaction, d'entrer son code confidentiel sur son dispositif et non sur celui d'un tiers, limitant ainsi les risques de vol du code confidentiel.

Selon un mode de réalisation particulier, lesdits moyens pour authentifier ladite commande d'acceptation comprennent des moyens pour saisir un code confidentiel et des moyens pour comparer ledit code confidentiel à un code préalablement enregistré. Le dispositif comprend de préférence des moyens de mémorisation interne sécurisés adaptés à stocker ledit code préalablement enregistré.

L'invention a également pour objet un dispositif électronique portable personnel pour permettre à un utilisateur de procéder à un transfert d'un montant en valeurs, ledit dispositif comprenant des moyens de communication sans fil à faible portée, ce dispositif comprenant les moyens suivants,
- moyens pour recevoir un message sécurisé comprenant au moins une donnée liée audit montant en valeurs, ledit message sécurisé étant reçu via lesdits moyens de communication sans fil à faible portée ;
- moyens pour ajouter au moins une information complémentaire audit message sécurisé reçu, ledit message sécurisé complété formant au moins une partie d'un message de transaction ; et,
- moyens pour transmettre ledit message de transaction.

Le dispositif selon l'invention permet à un débiteur, lors d'une transaction, d'entrer le montant de la transaction et son code confidentiel sur son dispositif et non sur celui d'un tiers, limitant ainsi les risques de vol du code confidentiel.

Selon un mode de réalisation particulier, le dispositif comprend en outre des moyens de mémorisation dans lesquels est stockée ladite au moins une information complémentaire afin de permettre à un créditeur d'éviter la saisie de ces informations à chaque transaction. Ladite au moins une information complémentaire est avantageusement une référence d'un compte à créditer ou une référence dudit créditeur.

Le dispositif comprend en outre, de préférence, des moyens cryptographiques pour authentifier ledit message sécurisé afin d'en authentifier l'origine.

Le dispositif comprend de préférence des moyens pour ajouter au moins une information d'authentification audit message sécurisé, ladite au moins une information d'authentification permettant à un destinataire dudit message sécurisé, par exemple un tiers devant effectuer la transaction, d'authentifier ledit message sécurisé. Le débiteur, le créditeur et/ou ladite au moins une donnée peuvent ainsi être authentifiés. Les informations d'authentification sont, par exemple, une signature obtenue à l'aide de moyens cryptographiques. Avantageusement, lesdits moyens cryptographiques sont adaptés à chiffrer ledit message signé de transaction pour sécuriser la transaction.

Toujours selon un mode de réalisation particulier, lesdits moyens pour transmettre ledit message de transaction sont adaptés à transmettre de façon différée ledit message de transaction. Une transaction peut ainsi être initiée en l'absence d'une connexion à un réseau de téléphonie mobile ou à un réseau de communication de données.

De façon avantageuse, le dispositif comprend en outre des moyens pour recevoir un message de confirmation de transaction et des moyens pour mémoriser au moins un message reçu de confirmation de transaction.

Selon un mode de réalisation particulier, le dispositif comprend en outre des moyens pour mémoriser au moins un premier nombre et des moyens pour soustraire ou additionner au moins un second nombre, selon ladite au moins une données. La transaction peut ainsi être effectuée directement entre des dispositifs électroniques portables, sans avoir recours à un système informatique d'un tiers.

De façon avantageuse, pour améliorer la sécurité de la transaction, le dispositif comprend en outre des moyens adaptés à établir un canal de communication sécurisée entre lesdits moyens de communication sans fil à faible portée et des moyens équivalents d'un autre dispositif électronique portable pour sécuriser la transaction.

Selon un mode de réalisation particulier, le dispositif comprend des moyens de téléphonie mobile ou des moyens d'accès à un réseau de communication de données permettant la transmission d'une requête de transaction à un système informatique d'un tiers.

Le dispositif selon l'invention permet ainsi de combiner un échange local d'information et un échange d'information via, par exemple, un réseau de téléphonie mobile ou de données pour simplifier et sécuriser une transaction.

De façon avantageuse, le dispositif comprend en outre des moyens pour indiquer l'état de ladite transaction. Le dispositif selon l'invention permet ainsi, en particulier, de déterminer si les dispositifs du débiteur et du créditeur doivent être à proximité l'un de l'autre.

Lesdits moyens de communication sans fil à faible portée sont, par exemple, conformes à la norme NFC. Ils peuvent être intégrés dans une carte à microcircuit.

Ledit montant en valeurs est, par exemple, une valeur monétaire, un nombre de points de fidélité, un bon d'achat ou d'abonnement, un nombre de points de jeux, un nombre d'unités téléphoniques ou des droits de restitution d'enregistrements numériques.

L'invention a aussi pour objet un téléphone mobile comprenant le dispositif tel que décrit précédemment.

L'invention a également pour objet un procédé pour la transmission d'un montant en valeurs entre un créditeur et un débiteur, chacun pourvu d'une entité électronique portable personnelle comprenant des moyens de communication sans fil à faible portée, ce procédé comprenant les étapes suivantes,
- saisie d'au moins une donnée liée audit montant en valeurs ;
- saisie d'un code confidentiel ;
- authentification dudit code confidentiel ;
- création d'un message sécurisé comprenant ladite au moins une donnée ; et,
- transmission dudit message sécurisé via lesdits moyens de communication sans fil à faible portée.

Le procédé selon l'invention permet à un débiteur, lors d'une transaction, d'entrer le montant de la transaction ainsi que son code confidentiel sur son dispositif et non sur celui d'un tiers, limitant ainsi les risques de vol du code confidentiel.

Selon un mode de réalisation particulier, ladite étape d'authentification dudit code confidentiel comprend une étape de comparaison dudit code confidentiel à un code préalablement enregistré.

De façon avantageuse, le procédé comprend en outre une étape de signature dudit message sécurisé permettant une authentification ultérieure de celui-ci. De même, le procédé comprend de préférence une étape de chiffrement d'au moins une partie dudit message sécurisé pour le protéger et éviter qu'il ne soit modifié à l'insu du débiteur.

Le procédé comprend en outre, de préférence, une étape pour ajouter au moins une référence d'un compte à débiter ou au moins une référence dudit débiteur audit message sécurisé pour éviter au débiteur de saisir ces références lors de chaque transaction.

Le procédé comprend de préférence une étape pour ajouter au moins une information d'authentification audit message sécurisé, ladite au moins une information d'authentification permettant à un destinataire dudit message sécurisé, par exemple le créditeur et/ou un tiers devant effectuer la transaction, d'authentifier ledit message sécurisé. Les informations d'authentification peuvent être différentes pour le créditeur et pour le tiers devant effectuer la transaction. Le débiteur et/ou ladite au moins une donnée peuvent ainsi être authentifiés. Les informations d'authentification sont, par exemple, une signature.

L'invention a aussi pour objet un procédé pour la transmission d'un montant en valeurs entre un créditeur et un débiteur, chacun pourvu d'une entité électronique portable personnelle comprenant des moyens de communication sans fil à faible portée, ce procédé comprenant les étapes suivantes,
- réception, via lesdits moyens de communication sans fil à faible portée, d'au moins une référence d'un compte à créditer ou d'un créditeur
- saisie d'au moins une donnée liée audit montant en valeurs ;
- saisie d'un code confidentiel ;
- authentification dudit code confidentiel ; et,
- création et transmission d'un message de transaction comprenant ladite au moins une donnée et ladite au moins une référence reçue.

Le procédé selon l'invention permet à un débiteur, lors d'une transaction, d'entrer le montant de la transaction ainsi que son code confidentiel sur son dispositif et non sur celui d'un tiers, limitant ainsi les risques de vol du code confidentiel.

Selon un mode de réalisation particulier, ladite étape d'authentification dudit code confidentiel comprend une étape de comparaison dudit code confidentiel à un code préalablement enregistré.

L'invention a également pour objet un procédé pour la transmission d'un montant en valeurs entre un créditeur et un débiteur, chacun pourvu d'une entité électronique portable personnelle comprenant des moyens de communication sans fil à faible portée, ce procédé étant caractérisé en ce qu'il comprend les étapes suivantes,
- réception d'un message sécurisé comprenant au moins une donnée liée audit montant en valeurs, ledit message sécurisé étant reçu via lesdits moyens de communication sans fil à faible portée ;
- ajout d'au moins une information complémentaire audit message sécurisé reçu, ledit message sécurisé complété formant au moins une partie d'un message de transaction ; et,
- transmission dudit message de transaction.

Le procédé selon l'invention permet à un débiteur, lors d'une transaction, d'entrer le montant de la transaction ainsi que son code confidentiel sur son dispositif et non sur celui d'un tiers, limitant ainsi les risques de vol du code confidentiel.

Avantageusement, le procédé comprend en outre une étape d'authentification dudit message sécurisé pour authentifier l'origine de celui-ci.

Selon un mode de réalisation particulier, ladite au moins une information complémentaire comprend une référence à un compte à créditer ou une référence dudit créditeur pour permettre au créditeur d'éviter la saisie de ces références lors de chaque transaction.

Toujours selon un mode de réalisation particulier, le procédé comprend en outre une étape pour ajouter au moins une information d'authentification audit message de transaction, ladite au moins une information d'authentification permettant à un destinataire dudit message de transaction, par exemple le tiers devant effectuer la transaction, d'authentifier ledit message de transaction. Ladite au moins une donnée, ledit débiteur et/ou ladite référence d'un compte à créditer ou d'un créditeur peuvent ainsi être identifiés. Ladite au moins une information d'authentification peut être une signature, ledit message de transaction étant signé sous forme de requête de transaction, pour permettre une authentification ultérieure de la requête de transaction.

Le procédé comprend en outre, de préférence, une étape de chiffrement d'au moins une partie dudit message de transaction, ledit message de transaction étant chiffré sous forme de requête de transaction, pour sécuriser la transaction.

De façon avantageuse, le procédé comprend une étape d'établissement d'un canal de communication sécurisée entre lesdits moyens de communication sans fil à faible portée desdites entités électroniques portables pour sécuriser la transaction.

Ledit code confidentiel est de préférence saisi par ledit débiteur, sur son entité électronique portable, pour réduire les risques de vol dudit code confidentiel.

Selon un mode de réalisation particulier, ledit message de transaction est transmis par un réseau mobile de communication ou par un réseau de communication de données permettant la transmission d'une requête de transaction à un système informatique d'un tiers.

Le procédé selon l'invention permet ainsi de combiner un échange local d'information et un échange d'information via, par exemple, un réseau de téléphonie mobile ou de données pour simplifier et sécuriser une transaction.

Toujours selon un mode de réalisation particulier, le procédé comprend en outre une étape d'addition ou de soustraction de ladite au moins une donnée à un nombre préalablement mémorisé. La transaction peut ainsi être effectuée directement entre des entités électroniques portables, sans avoir recours au système informatique d'un tiers.

Le procédé comprend avantageusement une étape de rapprochement desdites entités électroniques portables pour sécuriser la transaction en limitant la diffusion des informations transmises.

De façon avantageuse, le procédé comprend en outre une étape pour indiquer l'état de ladite transaction. Le procédé selon l'invention permet ainsi, en particulier, de déterminer si les entités électroniques portables du débiteur et du créditeur doivent être à proximité l'une de l'autre.

Selon un mode de réalisation particulier, ledit montant en valeurs est une valeur monétaire, un nombre de points de fidélité, un bon d'achat ou d'abonnement, un nombre de points de jeux, un nombre d'unités téléphoniques ou des droits de restitution d'enregistrements numériques.

Toujours selon un mode de réalisation particulier, au moins l'une desdites entités électroniques portables est un téléphone mobile.

D'autres avantages, buts et caractéristiques de la présente invention ressortent de la description détaillée qui suit, faite à titre d'exemple non limitatif, au regard des dessins annexés dans lesquels :
- la figure 1 représente schématiquement une entité électronique portable permettant la mise en oeuvre de l'invention ;
- la figure 2, comprenant les figures 2a et 2b, illustre un premier exemple d'algorithme pour mettre en oeuvre l'invention afin de transférer un montant en valeurs entre un débiteur et un créditeur, muni chacun d'une entité électronique portable ;
- la figure 3 illustre un exemple d'une partie de message pouvant être transmis par l'entité électronique portable du débiteur à celle du créditeur lors de la transaction, avant qu'il ne soit chiffré ;
- la figure 4 illustre un exemple d'une partie de message transmis par l'entité électronique portable du créditeur à celle du débiteur lorsque le créditeur a validé la transaction ou d'une partie de message transmis à un système informatique d'un établissement bancaire, d'un tiers de confiance ou d'une personne en charge de la gestion des valeurs considérées, sous forme de requête de transaction ; et,
- la figure 5, comprenant les figures 5a, 5b et 5c, illustre un second exemple de mise en oeuvre de l'invention pour transférer un montant en valeurs entre un débiteur et un créditeur, muni chacun d'une entité électronique portable.

L'invention permet à un débiteur de transmettre un montant en valeurs à un créditeur à l'aide d'entités électroniques telles que des téléphones mobiles ou des cartes à microcircuit comprenant des dispositifs d'affichage et de saisie. Les entités électroniques sont ici pourvues de moyens de communication sans fil à faible portée autorisant, par exemple, une communication à une distance maximale d'un mètre, de cinquante centimètres ou de vingt centimètres.

L'une au moins des deux entités électroniques est également pourvue de moyens de communication pour permettre de transférer une requête de transaction à un système informatique, typiquement un serveur, d'un établissement bancaire, d'un tiers de confiance ou d'une personne en charge de la gestion des valeurs considérées. De tels moyens de communication sont par exemple des moyens de communications téléphoniques, notamment GSM (sigle de *Global System for Mobile Communications* en terminologie anglo-saxonne) ou GPRS (sigle de *General Packet Radio Service* en terminologie anglo-saxonne). Alternativement, ces moyens de communication permettent d'accéder à un réseau de communication de données auquel est relié le système informatique de l'établissement bancaire, du tiers de confiance ou de la personne en charge de la gestion des valeurs considérées, pour transmettre la requête de transaction via le réseau. De tels moyens de communication sont, à titre d'illustration, compatibles avec au moins l'une des normes WiFi.

Les montants en valeurs sont par exemple des valeurs monétaires, des points de fidélité, des bons d'achat ou d'abonnements, des points de jeux, des unités téléphoniques ou des droits de restitution d'enregistrements numériques (audio ou audio et vidéo).

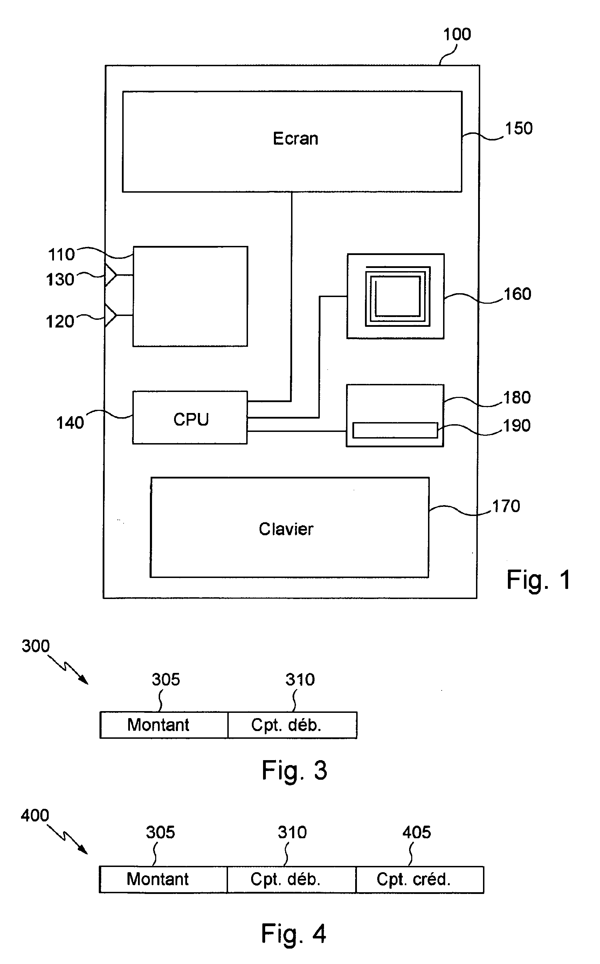

La figure 1 représente une entité électronique portable 100, ici un téléphone mobile, apte à mettre en oeuvre l'invention. Comme illustré, le téléphone mobile 100 comprend un module 110 de téléphonie mobile, avantageusement relié à un haut-parleur 120 et à un microphone 130. Le téléphone mobile 100 comprend également une unité centrale de traitement 140, aussi appelée CPU (sigle de *Central Processing Unit* en terminologie anglo-saxonne) et, de préférence, un écran 150.

Le téléphone mobile 100 comprend en outre un module 160 de communication à faible portée, avantageusement un module de communication sans fil à faible portée. Le module 160 est par exemple du type NFC (sigle de *Near Field Communication* en terminologie anglo-saxonne). Le module 160 peut être directement implanté dans le téléphone mobile 100, par exemple sous forme de circuit intégré et d'antenne, ou inséré dans le téléphone mobile 100, par exemple, sous forme de carte à microcircuit comprenant une antenne intégrée.

Le téléphone mobile comprend également un dispositif de saisie 170, tel qu'un clavier ou un dispositif équivalent, pour saisir des caractères, des montants en valeurs et/ou des commandes. Le dispositif de saisie 170 forme, en coopération avec l'écran 150, une interface utilisateur. Le dispositif de saisie 170 peut également être intégré à l'écran 150 sous forme d'écran tactile.

Le téléphone mobile 100 comprend aussi un module mémoire 180 adapté à mémoriser au moins une application 190 permettant l'échange de montants en valeurs, à l'aide du module 160 de communication sans fil à faible portée, avec une autre entité électronique portable pourvu d'un module de communication compatible avec celui-ci.

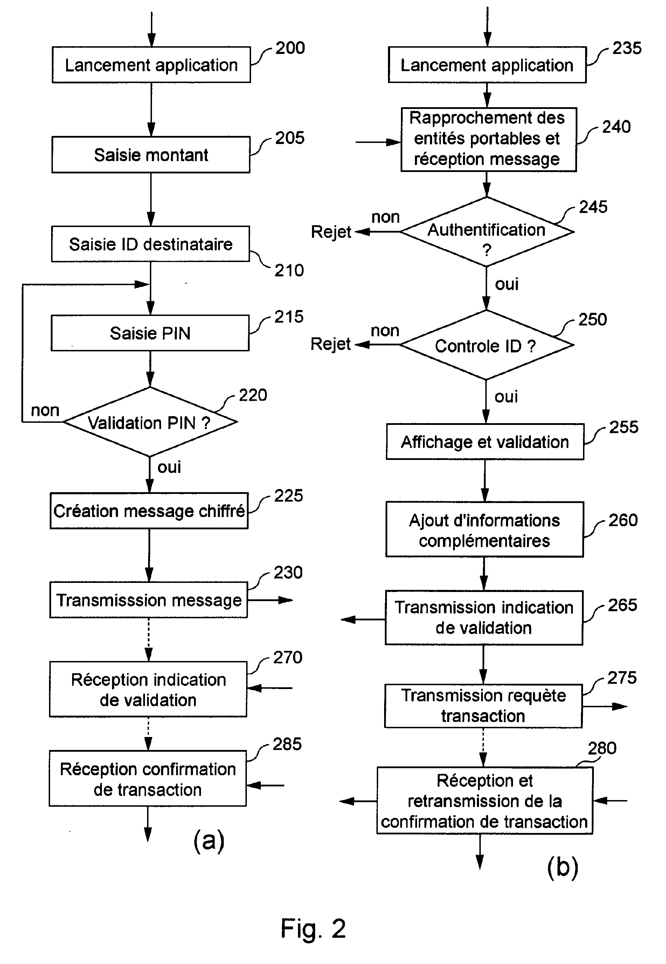

La figure 2, comprenant les figures 2a et 2b, illustre un premier exemple d'algorithme pour mettre en oeuvre l'invention afin de transférer un montant en valeurs entre deux personnes, un débiteur et un créditeur, muni chacun d'une entité électronique portable. Le débiteur est la personne à qui le montant en valeurs est retiré, par exemple le titulaire d'un compte qui est débité, tandis que le créditeur est la personne qui reçoit le montant en valeur, par exemple le titulaire d'un compte qui est crédité. Les deux entités électroniques portables, qui sont ici similaires, sont, par exemple, le téléphone mobile présenté sur la figure 1. Le débiteur et le créditeur disposent ainsi de téléphones mobiles 100 et 100', respectivement.

La figure 2a représente l'algorithme mis en oeuvre sur l'entité électronique portable du débiteur tandis que la figure 2b représente l'algorithme mis en oeuvre sur l'entité électronique portable du créditeur. Ces algorithmes sont de préférence intégrés partiellement dans un module sécurisé (authentification et ajout d'informations permettant l'authentification) et partiellement dans une même application, par exemple les applications 190 et 190', pouvant être utilisée pour des opérations de débit et de crédit (interface utilisateur).

Tout d'abord, le débiteur doit lancer l'application permettant de transférer un montant en valeurs (étape 200). Cette application est par exemple l'application 190 représentée sur la figure 1. L'utilisateur peut ensuite saisir un montant en valeurs (étape 205) à l'aide du dispositif de saisie 170. Ce montant peut être affiché sur l'écran 150 avant qu'il ne soit validé.

Lorsque l'utilisateur a validé ce montant, il peut être invité à entrer un identifiant du créditeur (étape 210), en particulier si un canal de communication sécurisé n'a pas été établi entre les entités électroniques portables du débiteur et du créditeur. L'identifiant du créditeur est de préférence court, tel que des initiales. Il peut être représenté, par exemple, sur six octets. A nouveau, l'identifiant du créditeur peut être affiché avant qu'il ne soit validé. Cet identifiant est, par exemple, donné oralement par le créditeur.

L'utilisateur est ensuite invité à entrer une indication permettant son authentification telle qu'un numéro d'identification personnel (étape 215), aussi appelé code confidentiel ou code PIN (acronyme de *Personnal Identification Number* en terminologie anglo-saxonne). Ce code n'est, de préférence, pas affiché ou est avantageusement au moins partiellement masqué afin qu'il ne soit pas visualisable par une personne malveillante.

Lorsque le code confidentiel a été validé, par l'utilisateur ou automatiquement s'il répond à des règles prédéterminées, un test est effectué pour authentifier l'utilisateur (étape 220). Pour cela, le code confidentiel peut être transmis à un module d'authentification qui peut être implanté, par exemple, dans le module 160 de communication sans fil à faible portée. Le module d'authentification compare le code entré par l'utilisateur avec un code préalablement enregistré. Si le code confidentiel entré par l'utilisateur ne correspond pas au code préalablement enregistré, l'utilisateur est invité à entrer le code confidentiel à nouveau. Le nombre de tentative pour entrer le code confidentiel peut être limité, par exemple à 3 essais. Alternativement, ou de façon complémentaire, un temps de pause peut être introduit entre chaque tentative, le temps de pause augmentant entre chaque tentative.

Si le code confidentiel est correct, le module d'authentification adresse un accusé réception à l'application 190 permettant de transférer un montant en valeurs qui, de préférence, affiche une indication d'authentification sur l'écran 150 pour prévenir que la transaction peut être effectuée.

Un message est créé (étape 225). Le message comprend notamment le montant en valeurs saisi par l'utilisateur. De façon avantageuse, le message comprend également des indications relatives à l'identification débiteur et/ou du compte devant être débité. La figure 3 illustre un exemple des informations contenues dans un tel message. Ce message peut être créé par l'application 190.

Il convient de noter ici que le message peut également comprendre une indication relative à l'identité du créditeur, telle que ses initiales. Cependant, selon un mode de réalisation avantageux, la transaction est précédée par un échange d'informations préliminaires, par l'interface de communication sans fil à faible portée, entre les deux entités électroniques portables afin de mettre en place un canal de communication sécurisé. Il n'est donc pas nécessaire, ici, d'insérer une indication relative au destinataire dans le message. Cet échange d'informations préliminaires est également utilisé pour la transmission d'une ou de plusieurs clés cryptographiques temporaires, utilisées pour chiffrer et déchiffrer les données échangées.

La communication établie entre les entités électroniques portables est de préférence sécurisée à l'aide d'un module de sécurisation comprenant des moyens cryptographiques connus de l'homme du métier, typiquement des moyens pour chiffrer, déchiffrer, signer et vérifier une signature et des moyens pour mémoriser une ou plusieurs clés cryptographiques.

Comme indiqué précédemment, un canal de communication sécurisé est de préférence établi entre les deux entités électroniques portables. La communication par l'interface de communication sans fil à faible portée étant alors sécurisée par l'usage de clés temporaires, il n'est pas toujours nécessaire de chiffrer spécifiquement le message à l'aide d'une autre clé.

Alternativement, au moins une partie du message est de préférence chiffrés et/ou signés. Par exemple, l'indication relative au créditeur peut être chiffrée et signée pour permettre au créditeur d'authentifier le message tandis que les informations relatives au montant et au numéro de compte du débiteur peuvent être chiffrées et signées pour permettre au serveur en charge d'effectuer la transaction d'authentifier le message pour vérifier qu'il a bien été soumis par le débiteur. Dans ce cas, deux clés différentes peuvent être utilisées.

Un module de sécurisation comprenant des moyens cryptographiques pour chiffrer, déchiffrer, signer et vérifier une signature peut être implanté, par exemple, dans le module 160 de communication sans fil à faible portée. Le module de sécurisation comprend de préférence un microcontrôleur sécurisé, certifié selon les critères communs ou conforme aux exigences FIPS (acronyme de *Federal Information Processing Standards* en terminologie anglo-saxonne). Ce module est utilisé pour chiffrer et déchiffrer toutes les données transitant par le canal de communication sécurisé ou, plus spécifiquement, le message. Le message est alors transmis au module 160 de communication sans fil à faible portée pour y être chiffré. Les moyens de chiffrement sont par exemple basés sur des algorithmes standard tels que les algorithmes DES (sigle de *Data Encryption Standard* en terminologie anglo-saxonne), AES (sigle de *Advanced Encryption Standard* en terminologie anglo-saxonne) et RSA (initiales des auteurs de cet algorithme : Rivest, Shamir et Adleman), et une clé mémorisée. Le module de sécurisation peut également être implanté ailleurs, par exemple dans une carte SIM (acronyme de *Subscriber Identity Module* en terminologie anglo-saxonne) insérée dans l'entité électronique portable ou dans l'application 190.

Naturellement, il existe d'autres systèmes pour sécuriser la transaction et authentifier l'auteur du message.

Le message chiffré est ensuite transmis au créditeur (étape 230) par le module 160 de communication sans fil à faible portée.

Si les entités électroniques portables du débiteur et du créditeur ne sont pas proches l'une de l'autre, elles doivent être approchées pour être à proximité l'une de l'autre, par exemple à une distance inférieure à 20 centimètres ou à 50 centimètres. La distance minimale relative entre les entités électroniques portables est déterminée par la portée des moyens de communication sans fil à faible portée. Cette étape de rapprochement des entités électroniques portables contribue à la sécurité du système en limitant le risque que les informations échangées ne soient interceptées et utilisées par un tiers.

De son côté, le créditeur, lorsqu'il s'est mis d'accord avec le débiteur, lance l'application, référencée 190', permettant de transférer un montant en valeurs (étape 235). Alternativement, l'application 190' peut être lancée automatiquement après réception du message, lorsque le message reçu a été identifié comme un message de transaction.

Lorsque l'entité électronique portable 100' du créditeur reçoit le message chiffré émis par le débiteur (étape 240) à l'aide son module 160' de communication sans fil à faible portée, une étape d'authentification (étape 245) est mise en oeuvre. Cette étape d'authentification, basée, par exemple, sur l'utilisation d'une clé publique, a pour objet de contrôler l'origine du message reçu. L'authentification est, de préférence, réalisée par un module de sécurisation implanté, par exemple, dans le module 160'.

Si le message n'est pas authentifié, il est rejeté.

Si le message est authentifié et si le message n'est pas reçu par un canal de communication sécurisé, un test est effectué pour déterminer si l'utilisateur de l'entité électronique portable 100' est le destinataire du transfert (étape 250), c'est-à-dire si l'utilisateur de cette entité électronique portable est le créditeur. A cette fin, les indications relatives à l'identité du créditeur contenues dans le message reçu sont comparées aux indications relatives à l'identité du créditeur préalablement mémorisées dans l'entité électronique portable 100', par exemple dans le module de sécurisation qui peut être implanté dans le module 160' de communication sans fil à faible portée. Ce test permet de sécuriser le transfert et de réduire le risque, faible (la portée de communication est limitée), que le message ne soit intercepté par une autre entité électronique portable.

Si l'utilisateur n'est pas le destinataire du transfert, le message est rejeté.

Si l'utilisateur est le destinataire du transfert, le message reçu est transféré à l'application 190'. Si une partie du message est confidentielle, seule la partie non confidentielle est, de préférence, transmise à l'application 190' qui n'est pas nécessairement sécurisée. Certaines informations contenues dans le message sont alors, de préférence, affichées sur l'écran 150' pour permettre au créditeur de valider la transaction (étape 255). Les informations affichées sont, par exemple, le montant et des indications relatives à l'identité du débiteur.

L'utilisateur peut utiliser le dispositif de saisie 170' pour valider ou non la transaction. Si l'utilisateur ne valide pas la transaction, le message est rejeté. Au contraire, si l'utilisateur valide la transaction, des informations complémentaires sont ajoutées au message reçu (étape 260). Comme illustré sur la figure 4, ces informations complémentaires sont par exemple des données relatives à l'identité du créditeur et au compte devant être crédité. Ces informations complémentaires, de préférence chiffrées dans le message, peuvent être ajoutées, sur requête de l'application 190', par le module de sécurisation. Cette requête pour ajouter les informations complémentaires est ainsi, de préférence, transmise, avec une indication de validation, au module 160' comprenant, par exemple, le module de sécurisation. Le module 160' de communication sans fil à faible portée transmet (étape 265), à son tour, une indication de validation au module 160 de communication sans fil à faible portée de l'entité électronique portable du débiteur. L'indication de validation transmise de l'entité électronique portable du créditeur à celle du débiteur comporte avantageusement les informations complémentaires ajoutées au message.

L'indication de validation reçue par le module 160 de communication sans fil à faible portée de l'entité électronique portable du débiteur peut être mémorisée par ce module ou dans le module mémoire 180 (étape 270). L'indication de validation peut être affichée sur l'écran 150.

Une requête de transaction est alors émise par l'entité électronique portable du créditeur au système informatique de l'établissement bancaire, du tiers de confiance ou de la personne en charge de la gestion des valeurs considérées (étape 275). Cette requête est ici transmise par le réseau de téléphonie mobile.

La requête de transaction peut contenir des informations permettant d'authentifier la requête, notamment des informations d'authentification ajoutées par les modules 160 et/ou 160' à l'aide de clés cryptographiques mémorisées dans ces modules (ces clés cryptographiques sont différentes des clés temporaires utilisées pour sécuriser la communication entre les deux entités électroniques portables). La requête de transaction est ainsi, avantageusement, similaire à l'indication de validation transmise de l'entité électronique portable du créditeur à celle du débiteur, éventuellement chiffrée avec une clé différente, permettant l'authentification par un tiers de confiance.

Alternativement, la requête de transaction peut être émise par l'entité électronique portable du débiteur en prenant en compte les informations complémentaires reçues avec l'indication de validation.

La requête de transaction peut également être transmise par un réseau de communication de données tel qu'Internet.

Si la requête de transaction n'est pas rejetée par le système informatique de l'établissement bancaire, du tiers de confiance ou de la personne en charge de la gestion des valeurs considérées, par exemple, si le compte n'est pas suffisamment crédité, la transaction est effectuée, de façon standard, par le système informatique de l'établissement bancaire, du tiers de confiance ou de la personne en charge de la gestion des valeurs considérées. Un message de confirmation de la transaction est de préférence adressé aux entités électroniques portables du débiteur et du créditeur lorsque la transaction a été effectuée (étapes 280 et 285) ou, préférentiellement, à la seule entité électronique portable de l'émetteur de la requête de la transaction. Dans ce cas, l'entité électronique portable de l'émetteur de la requête de la transaction transmet avantageusement à l'autre entité électronique portable le message de confirmation ou de rejet de la transaction.

Les confirmations de transaction sont mémorisées dans chaque entité électronique portable, de préférence dans une mémoire non volatile, à des fins d'archivage.

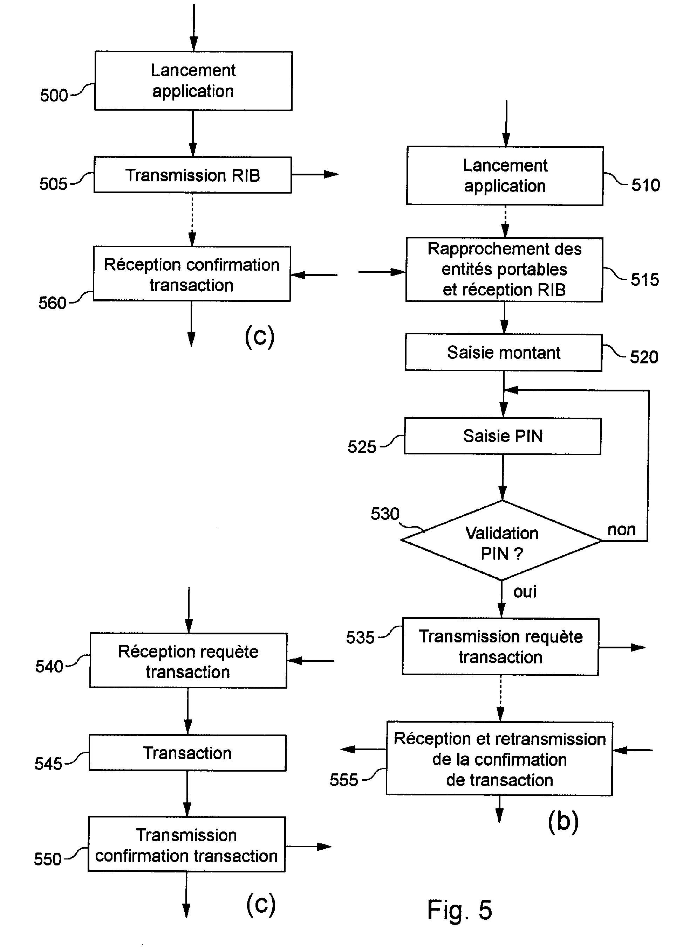

Alternativement, la transaction peut être initiée par le créditeur qui transmet un message comprenant les références du compte à créditer au débiteur, celui-ci adressant un message de validation de la transaction au débiteur, avec d'éventuelles informations complémentaires le concernant. Un tel mode de mise en oeuvre est décrit par référence à la figure 5.

Il convient de remarquer ici que le module 160 de communication sans fil à faible portée peut se présenter sous forme d'une carte à microcircuit. Ce module est, par exemple, un porte-monnaie électronique. Alternativement, le module 160 de communication sans fil à faible portée peut être intégré à l'unité centrale de traitement 140 formant alors un seul circuit intégré. Il peut s'agir également d'un circuit intégré comprenant l'antenne, ou non, monté dans le corps de l'entité électronique portable. L'antenne peut être intégrée au circuit ou à un autre composant de l'entité électronique portable.

Par ailleurs, la connexion au système informatique de l'établissement bancaire, du tiers de confiance ou de la personne en charge de la gestion des valeurs considérées et la communication de la requête de transaction peut être effectuée au cours de la transaction ou peut être différée dans le temps. Cette communication est de préférence sécurisée. En particulier, la requête de transaction reçue par le système informatique de l'établissement bancaire, du tiers de confiance ou de la personne en charge de la gestion des valeurs considérées est avantageusement authentifiée.

Si les valeurs sont mémorisées et mises à jours directement dans les entités électroniques portables, il n'est pas nécessaire d'effectuer une connexion à un système informatique de l'établissement bancaire, du tiers de confiance ou de la personne en charge de la gestion des valeurs considérées. Par exemple, si les modules 160 et 160' de communication sans fil à faible portée sont des porte-monnaie électroniques et si les applications 190 et 190' disposent des fonctions permettant de diminuer et d'augmenter les valeurs mémorisées, l'établissement d'une connexion n'est pas requis. De même, si les valeurs considérées sont du type points de fidélité, si elles sont mémorisées directement dans les entités électroniques portables et si les modules de sécurisation, ou alternativement les applications 190 et 190', disposent des fonctions permettant de diminuer et d'augmenter les valeurs mémorisées, il n'est pas nécessaire d'établir une connexion.

La figure 3 illustre un exemple d'une partie de message pouvant être transmis par l'entité électronique portable du débiteur à celle du créditeur, lors de la transaction, avant qu'il ne soit chiffré (étapes 225 et 230 de la figure 2). Comme illustré, le message 300 comprend ici un premier champ 305 correspondant au montant de la transaction et un second champ 310 correspondant à la référence du compte à débiter ou à un identifiant du débiteur permettant de retrouver ces références. Le message 300 peut également comprendre un troisième champ correspondant à l'identifiant du créditeur, par exemple ses initiales. Naturellement, le second champ 310 n'est pas nécessaire si les valeurs sont stockées directement dans l'entité électronique portable du débiteur, c'est-à-dire lorsque le message 400 n'est pas nécessairement transmis à un serveur d'un tiers pour effectuer la transaction. Comme indiqué précédemment, le message 300 est de préférence chiffré avant d'être transmis. Certaines données du message telles que la signature et les clés ne sont pas représentées sur la figure 3.

La figure 4 illustre un exemple d'une partie de message transmis par l'entité électronique portable du créditeur à celle du débiteur lorsque le créditeur a validé la transaction (étape 265 de la figure 2) ou d'une partie de message transmis à un système informatique d'un établissement bancaire, d'un tiers de confiance ou d'une personne en charge de la gestion des valeurs considérées, sous forme de requête de transaction.

Comme illustré, le message 400 comprend les champs 305 et 310 décrits précédemment, relatifs au montant de la transaction et au compte à débiter ou à l'identification du débiteur. Le message 400 comprend en outre un champ 405 correspondant à la référence du compte à créditer ou à des indications relatives au créditeur permettant de retrouver cette référence. Comme indiqué précédemment, le deuxième champ 310 et/ou le troisième champ 405 ne sont pas nécessaires si les valeurs sont stockées directement dans l'entité électronique portable du débiteur et/ou du créditeur, c'est-à-dire lorsque le message 400 n'est pas nécessairement transmis à un serveur d'un tiers pour effectuer la transaction. Certaines données du message telles que la signature et les clés ne sont pas représentées sur la figure 4. Le message 400 est de préférence chiffré avant d'être transmis.

Il convient de remarquer que si le créditeur peut lire le message 300 et ajouter des informations relatives au compte à créditer, le créditeur ne peut pas modifier les champs 305 et 310 concernant le montant de la transaction et les références du compte à débiter en raison de la sécurisation utilisée.

La figure 5, comprenant les figures 5a, 5b et 5c, illustre un second exemple de mise en oeuvre de l'invention pour transférer un montant en valeurs entre un débiteur et un créditeur, muni chacun d'une entité électronique portable. Ces entités électroniques portables, qui sont ici similaires, sont, par exemple, le dispositif présenté sur la figure 1. Le débiteur et le créditeur disposent ainsi de téléphones mobiles 100 et 100', respectivement.

La figure 5a représente l'algorithme mis en oeuvre sur l'entité électronique portable du créditeur, la figure 5b représente l'algorithme mis en oeuvre sur l'entité électronique portable du débiteur et la figure 5c représente l'algorithme mis en oeuvre par le système informatique de l'établissement bancaire, du tiers de confiance ou de la personne en charge de la gestion des valeurs considérées. Les algorithmes des figures 5a et 5b sont de préférence intégrés partiellement dans un module sécurisé (authentification et ajout d'information permettant l'authentification) et partiellement dans une même application, par exemple les applications 190 et 190', pouvant être utilisée pour des opérations de débit et de crédit (interface utilisateur).

Après avoir lancé l'application 190' de transfert de valeurs (étape 500), le créditeur sélectionne et active une fonction de transmission de RIB (acronyme de Relevé d'Identité Bancaire) ou d'information similaire permettant au destinataire de connaître les indications permettant d'effectuer le transfert de valeurs. Un RIB contient une identification d'établissement financier et un numéro de compte bancaire. Des informations similaires peuvent être, par exemple, un nom de commerçant et un numéro de client pour la gestion de points de fidélité.

La fonction de transmission de RIB est de préférence sélectionnée à l'aide du dispositif de saisie 170' et de l'écran 150'.

Si le RIB n'est pas mémorisé dans le module 160' de communication sans fil à faible portée, l'application 190' le lui transmet. Le module 160' de l'entité électronique portable 100' du créditeur transmet alors le RIB au module 160 de l'entité électronique portable 100 du débiteur (étape 505).

De son côté, le débiteur, lorsqu'il s'est mis d'accord avec le créditeur, lance l'application 190 permettant de transférer un montant en valeurs (étape 510) pour recevoir le RIB (étape 515). Si les entités électroniques portables 100 et 100' ne sont pas proches l'une de l'autre, elles doivent être approchées pour être à proximité l'une de l'autre, par exemple à une distance inférieure à 20 centimètres ou à 50 centimètres. La distance minimale relative entre les entités électroniques portables est déterminée par la portée des moyens de communication sans fil à faible portée.

Le RIB peut être transmis par un canal de communication sécurisé préalablement établi entre les entités électroniques portables.

Lorsque le module 160 de l'entité électronique portable 100 du débiteur reçoit le RIB, il le transmet à l'application 190 qui affiche un écran de saisie d'un montant en valeurs sur l'écran 150 (étape 520).

Après avoir saisi et validé le montant en valeurs du transfert, l'utilisateur est invité à entrer son code confidentiel (étape 525). Le code confidentiel est de préférence saisi à l'aide du dispositif de saisie 170. Il n'est, de préférence, pas affiché sur l'écran 150.

Un test est ensuite effectué pour déterminer si le code confidentiel est correct (étape 530). Pour cela, le code confidentiel peut être transmis à un module de sécurisation comprenant des moyens cryptographiques qui peut être implanté, par exemple, dans le module 160 de communication sans fil à faible portée. Le module de sécurisation compare le code entré par l'utilisateur avec un code préalablement enregistré. Si le code confidentiel entré par l'utilisateur ne correspond pas au code préalablement enregistré, l'utilisateur est invité à entrer le code confidentiel à nouveau. Comme indiqué précédemment, le nombre de tentative pour entrer le code confidentiel peut être limité, par exemple à 3 essais. Alternativement, ou de façon complémentaire, un temps de pause peut être introduit entre chaque tentative, le temps de pause augmentant entre chaque tentative.

Si le code confidentiel est correct, le module de sécurisation adresse un accusé réception à l'application 190 autorisant le transfert. Une indication d'acceptation est de préférence affichée sur l'écran 150 pour prévenir que la transaction peut être effectuée.

Une requête de transaction est alors préparée par l'application 190 puis transmise (étape 535) au système informatique de l'établissement bancaire, du tiers de confiance ou de la personne en charge de la gestion des valeurs considérées. Cette requête comprend de préférence le montant de la transaction et des indications sur les références des comptes à débiter et à créditer. Les références du compte à créditer sont par exemple le RIB. Les références du compte à débiter sont de préférence mémorisées dans le module 160. La requête de transaction est similaire au message 400 décrit précédemment. Cette requête est avantageusement sécurisée et transmise par le réseau de téléphonie mobile. La requête sécurisée comprend de préférence des informations permettant son authentification. La sécurisation de la requête est effectuée par le module de sécurisation, avantageusement implanté dans le module 160, qui mémorise les clés nécessaires à la sécurisation.

La requête de transaction peut être transmise au moment de la transaction ou ultérieurement, de façon différée.

Les références de l'établissement bancaire, du tiers de confiance ou de la personne en charge de la gestion des valeurs considérées sont, de préférence, mémorisées dans l'entité électronique portable 100. Cependant, le débiteur peut les modifier ou les entrer au moment de la transaction.

Lorsque la requête de transaction est reçue (étape 540) par le système informatique de l'établissement bancaire, du tiers de confiance ou de la personne en charge de la gestion des valeurs considérées, celui-ci, authentifie la requête de transaction. Si la requête de transaction n'est pas authentifiée, elle est rejetée. De même, si la transaction ne peut pas être effectuée, par exemple si le compte du débiteur n'est pas suffisamment crédité, la requête de transaction est rejetée. Si la requête de transaction n'est pas rejetée, le montant en valeurs est transféré (étape 545) de façon standard (un ordre de débit est adressé au système de gestion du compte débiteur tandis qu'un ordre de crédit correspondant est adressé au système de gestion du compte créditeur). Un message de confirmation ou de rejet de la transaction est alors avantageusement transmis par le système informatique de l'établissement bancaire, du tiers de confiance ou de la personne en charge de la gestion des valeurs considérées (étape 550) aux entités électroniques portables du débiteur et du créditeur lorsque la transaction a été effectuée ou rejetée ou, préférentiellement, à la seule entité électronique portable de l'émetteur de la requête de la transaction. Dans ce cas, l'entité électronique portable de l'émetteur de la requête de la transaction transmet avantageusement à l'autre entité électronique portable le message de confirmation ou de rejet de la transaction.

Les confirmations de transaction sont avantageusement mémorisées dans chaque entité électronique portable, de préférence dans les modules de sécurisation.

A la réception de cette confirmation ou de ce rejet (étapes 555 et 560), une indication est affichée sur l'écran 150, ou sur les écrans 150 et 150', pour indiquer que la transaction a été effectuée ou rejetée.

Le message de confirmation peut prendre la forme d'un SMS (sigle de S*hort Message Service* en terminologie anglo-saxonne), les numéros de téléphone du débiteur et du créditeur étant transmis avec la requête de transaction ou étant mémorisés par le système informatique de l'établissement bancaire, du tiers de confiance ou de la personne en charge de la gestion des valeurs considérées en relation avec les références des comptes à débiter et à créditer.

Si l'accord du débiteur peut être validé par la saisie d'un code confidentiel et la comparaison du code saisie avec un code préalablement mémorisé, cet accord peut être validé selon d'autres techniques. En particulier, l'accord du débiteur peut être validé par des moyens biométriques tels qu'une comparaison d'empreinte digitale. Dans ce cas, l'entité électronique portable du débiteur doit être pourvue de moyens permettant la saisie de ces informations, par exemple un lecteur d'empreinte digitale.

De façon avantageuse, lorsqu'un échange de données entre les entités électroniques portables est mis en oeuvre pour procéder à la transaction, l'entité électronique portable du créditeur et/ou celle du débiteur disposent de moyens pour indiquer à l'utilisateur qu'une transaction est en cours et/ou qu'elle est terminée.

A titre d'illustration, une entité électronique portable émet un premier signal sonore lorsqu'un premier message est transmis et émet un second signal sonore, de préférence différent du premier, lorsqu'un second message, faisant suite au premier, est reçu. Alternativement, ou de façon complémentaire, une indication visuelle de transaction peut être affichée sur l'écran de l'entité électronique portable pour indiquer que la transaction est en cours ou terminée.

Naturellement, pour satisfaire des besoins spécifiques, une personne compétente dans le domaine de l'invention pourra appliquer des modifications dans la description précédente.

## Revendications

1. Dispositif électronique portable personnel (100) pour permettre à un débiteur d'initier un transfert d'un montant en valeurs, ledit dispositif comprenant des moyens de communication sans fil à faible portée (160), ce dispositif étant **caractérisé en ce qu'**il comprend les moyens suivants,
- moyens (170) pour saisir au moins une donnée liée audit montant en valeurs ;
- moyens (170) pour saisir une commande d'acceptation dudit transfert ;
- moyens pour authentifier ladite commande d'acceptation et, si ladite commande d'acceptation est authentifiée, pour transmettre directement à un dispositif électronique portable personnel du destinataire dudit transfert, via lesdits moyens de communication sans fil à faible portée (160), un message sécurisé comprenant ladite au moins une donnée.

2. Dispositif selon la revendication 1 comprenant en outre des moyens de mémorisation sécurisés dans lesquels est stockée au moins une référence d'un compte à débiter ou au moins une référence dudit utilisateur, ladite au moins une référence étant transmise dans ledit message sécurisé.

3. Dispositif selon l'une quelconque des revendications précédentes comprenant en outre des moyens pour ajouter au moins une information d'authentification audit message sécurisé, ladite au moins une information d'authentification permettant à un destinataire dudit message sécurisé d'authentifier ledit message sécurisé, ledit débiteur et/ou ladite au moins une donnée.

4. Dispositif selon la revendication 3 dans lequel lesdits moyens pour ajouter au moins une information d'authentification audit message sécurisé sont adaptés à ajouter au moins une seconde information d'authentification audit message sécurisé, ladite au moins une seconde information d'authentification permettant à un second destinataire dudit message sécurisé, différent dudit destinataire dudit message sécurisé, d'authentifier ledit message sécurisé.

5. Dispositif selon l'une quelconque des revendications précédentes comprenant en outre des moyens de mémorisation interne sécurisés adaptés à stocker un code préalablement enregistré, lesdits moyens pour authentifier ladite commande d'acceptation comprenant des moyens pour saisir un code confidentiel et des moyens pour comparer ledit code confidentiel audit code préalablement enregistré.

6. Dispositif électronique portable personnel (100) pour permettre à un débiteur d'initier un transfert d'un montant en valeurs, ledit dispositif comprenant des moyens de communication sans fil à faible portée (160), ce dispositif étant **caractérisé en ce qu'**il comprend les moyens suivants,
- moyens pour recevoir, via lesdits moyens de communication sans fil à faible portée (160), au moins une référence d'un compte à créditer ou d'un créditeur ;
- moyens (170) pour saisir au moins une donnée liée audit montant en valeurs ;
- moyens (170) pour saisir une commande d'acceptation dudit transfert ;
- moyens pour authentifier ladite commande d'acceptation ; et,
- moyens pour créer et transmettre un message de transaction comprenant ladite au moins une donnée et ladite au moins une référence reçue.

7. Dispositif selon la revendication précédente comprenant en outre des moyens de mémorisation interne sécurisés adaptés à stocker un code préalablement enregistré, lesdits moyens pour authentifier ladite commande d'acceptation comprenant des moyens pour saisir un code confidentiel et des moyens pour comparer ledit code confidentiel audit code préalablement enregistré.

8. Dispositif électronique portable personnel (100) pour permettre à un créditeur de procéder à un transfert d'un montant en valeurs, ledit dispositif comprenant des moyens de communication sans fil à faible portée (160), ce dispositif étant **caractérisé en ce qu'**il comprend les moyens suivants,
- moyens pour recevoir un message sécurisé d'un débiteur, ledit message sécurisé comprenant au moins une donnée liée audit montant en valeurs et étant reçu via lesdits moyens de communication sans fil à faible portée (160) ;
- moyens pour ajouter au moins une information complémentaire audit message sécurisé reçu, ledit message sécurisé complété formant au moins une partie d'un message de transaction ; et,
- moyens pour transmettre ledit message de transaction.

9. Dispositif selon la revendication 8 dans lequel ladite au moins une information complémentaire est une référence d'un compte à créditer ou une référence dudit créditeur.

10. Dispositif selon la revendication 8 ou la revendication 9 comprenant en outre des moyens cryptographiques pour authentifier ledit message sécurisé.

11. Dispositif selon l'une quelconque des revendications 6 à 10 comprenant en outre des moyens pour ajouter au moins une information d'authentification audit message de transaction, ladite au moins une information d'authentification permettant à un destinataire dudit message de transaction d'authentifier ledit message de transaction, ladite au moins une donnée, ledit débiteur et/ou ladite référence d'un compte à créditer ou d'un créditeur.

12. Dispositif selon l'une quelconque des revendications précédentes comprenant en outre des moyens pour recevoir un message de confirmation de transaction.

13. Procédé pour la transmission d'un montant en valeurs entre un créditeur et un débiteur, chacun pourvu d'une entité électronique portable personnelle (100) comprenant des moyens de communication sans fil à faible portée (160), ce procédé étant **caractérisé en ce qu'**il comprend les étapes suivantes,
- saisie (205) d'au moins une donnée liée audit montant en valeurs sur l'entité électronique portable personnelle dudit débiteur ;
- saisie (215) d'un code confidentiel sur l'entité électronique portable personnelle dudit débiteur ;
- authentification (220) dudit code confidentiel ;
- création (225) d'un message sécurisé comprenant ladite au moins une donnée ; et,
- transmission (230) dudit message sécurisé à l'entité électronique portable personnelle dudit créditeur via lesdits moyens de communication sans fil à faible portée.

14. Procédé pour la transmission d'un montant en valeurs entre un créditeur et un débiteur, chacun pourvu d'une entité électronique portable personnelle (100) comprenant des moyens de communication sans fil à faible portée (160), ce procédé étant **caractérisé en ce qu'**il comprend les étapes suivantes,
- réception (515) de l'entité électronique portable personnelle dudit créditeur, via lesdits moyens de communication sans fil à faible portée, d'au moins une référence d'un compte à créditer ou d'un créditeur
- saisie (520) d'au moins une donnée liée audit montant en valeurs sur l'entité électronique portable personnelle dudit débiteur ;
- saisie (525) d'un code confidentiel sur l'entité électronique portable personnelle dudit débiteur ;
- authentification (530) dudit code confidentiel ; et,
- création et transmission (535) d'un message de transaction comprenant ladite au moins une donnée et ladite au moins une référence reçue.

15. Procédé pour la transmission d'un montant en valeurs entre un créditeur et un débiteur, chacun pourvu d'une entité électronique portable personnelle (100) comprenant des moyens de communication sans fil à faible portée (160), ce procédé étant **caractérisé en ce qu'**il comprend les étapes suivantes,
- réception (240) d'un message sécurisé comprenant au moins une donnée liée audit montant en valeurs de l'entité électronique portable personnelle dudit débiteur, ledit message sécurisé étant reçu via lesdits moyens de communication sans fil à faible portée ;
- ajout (260) d'au moins une information complémentaire audit message sécurisé reçu, ledit message sécurisé complété formant au moins une partie d'un message de transaction ; et,
- transmission (275) dudit message de transaction.
